# EUROPÄISCHE PATENTSCHRIFT

(11) **EP 2 556 186 B1**
(45) Veröffentlichungstag und Bekanntmachung des Hinweises auf die Patenterteilung: **04.01.2017**
(21) Anmeldenummer: 11728178.2
(22) Anmeldetag: 08.04.2011
(51) Int. Cl.: D01D 1/02, D01D 1/06, D01F 2/00, D01F 1/02

(54) **VERFAHREN ZUR HERSTELLUNG EINES PRODUKTES**
PROCESS FOR PRODUCING A PRODUCT
PROCÉDÉ DE PRODUCTION D'UN PRODUIT

(30) Priorität: 14.09.2010 DE 102010037530; 11.06.2010 DE 102010017339; 08.04.2010 DE 102010014298
(43) Veröffentlichungstag der Anmeldung: 13.02.2013
(73) Patentinhaber: LIST Holding AG, 4422 Arisdorf (CH)
(72) Erfinder: STEINER, Manuel, CH-4054 Basel (CH); DIENER, Andreas, D-01665 Miltitz (DE); TRETZACK, Oliver, 79686 Hasel (DE); ZHAO, Dr. Wang Qian, 03-04, Singapore 448906 (SG)
(74) Vertreter: Patentanwälte und Rechtsanwalt Weiß, Arat & Partner mbB
(86) Internationale Anmeldenummer: PCT/EP2011/001765
(87) Internationale Veröffentlichungsnummer: WO 2011/124387

(56) Entgegenhaltungen:
- WO-A1-00/26447
- WO-A1-94/20653
- WO-A1-2009/098073
- US-A- 5 354 524
- US-B1- 6 488 876
- DATABASE WPI Week 200923 Thomson Scientific, London, GB; AN 2009-E88922 XP000002659418, & CN 101 353 824 A (UNIV ZHEJIANG) 28. Januar 2009 (2009-01-28)
- ANDREAS DIENER, OLIVER TRETZACK: "Continuous masterbatch process for the cellulose fiber industry", CHEMICAL FIBERS INTERNATIONAL, Bd. 3, 2. September 2011 (2011-09-02), Seiten 138-139, XP000002659419,

## Beschreibung

Die vorliegende Erfindung betrifft ein Verfahren zur Herstellung von Formkörpern, aus einer Grundsubstanz in einem Knetreaktor zum Mischen der Grundsubstanz mit einem Lösungsmittel, wobei die Grundsubstanz zum Herstellen einer Formlösung mit dem Lösungsmittel vermischt und anschliessend dieses Lösungsmittel teilweise aus dieser Mischung entfernt und die Formlösung einer weiteren Einrichtung zum Weiterverarbeiten des Produktes zugeführt wird, wobei die Formlösung vor dem Formen verdünnt wird.

### STAND DER TECHNIK

Im vorliegenden Fall kann das Produkt in jeden beliebigen Aggregatszustand übergeführt werden, beispielsweise in eine Flüssigkeit oder in einen Formkörper. Unter dem Begriff "Formkörper" werden alle möglichen Körper subsumiert, die aus einer natürlichen oder künstlichen Grundsubstanz hergestellt werden. Dies geschieht in der Regel mit Hilfe eines Formwerkzeugs, mit dem die Grundsubstanz in eine Form für die Formkörper gebracht wird. Als Beispiel, jedoch keineswegs einschränkend oder abschliessend, soll die Viskosefaser erwähnt werden.

Viskosefasern sind Fasern, die aus dem Grundmaterial Zellulose bestehen und über das Viskoseverfahren industriell hergestellt werden. Die chemische Natur der Viskosefasern gleicht der von Baumwollfasern.

Ein ähnliches Produkt wie Viskosefasern sind Modalfasern. Sie bestehen ebenfalls zu 100% aus Zellulose und werden, so wie Viskosefasern, aus natürlichem Zellstoff hergestellt. Durch einen etwas unterschiedlichen Prozess wird jedoch eine höhere Faserfestigkeit und verbesserte Fasereigenschaften erreicht.

Ebenfalls in die Klasse der zellulosischen Fasern sind die Tencel- und Lyocellfasern einzuordnen. Bei den Lyocellfasern wird der Zellstoff durch das ungiftige Lösungsmittel NMMO (N-Methylmorpholin-N-Oxid) ohne vorherige Reaktion mit Natronlauge und Derivatisierung zum Xanthogenat direkt und unverändert aufgelöst. Das Verspinnen der Lyocellfasern erfolgt in einem verdünnten, wässrigen NMMO-Bad, wobei die Löslichkeitsgrenze der Zellulose unterschritten und dadurch ein Faden gebildet wird. Zu diesem Zweck wird die entsprechende Spinnlösung durch Spinndüsen gedrückt. Dieses Lyocell-Verfahren wird beispielsweise in der DE 1 713 486, US-A-3 447 939 oder GB 8 216 566 beschrieben. Die Herstellung der geeigneten Spinnlösung erfolgt beispielsweise in einem horizontal arbeitenden Knetreaktor, wie dies in der DE 198 37 210 oder der WO02/20885 A1 aufgezeigt ist.

In diesen Vorrichtungen und nach den bekannten Verfahren wird die Spinnlösung in der für den Spinnprozess notwendigen weiter verarbeitbaren Viskosität und der dazugehörigen Zellulosekonzentration hergestellt. Die entsprechenden Einrichtungen zum Verspinnen können aber nur eine Spinnlösung mit niedriger Viskosität verarbeiten, was aber die Effektivität des Prozesses der Herstellung der Spinnlösung wesentlich reduziert. Für spezielle Anwendungen sind sehr niedrige Viskositäten und damit niedrige Zellulosegehalte notwendig, wobei diese Spinnlösung dann mit der bekannten Technologie nicht mehr effektiv hergestellt werden kann.

Des weiteren ist aus der WO2009/098073 ein Verfahren der o.g. Art bekannt, nach dem die Formlösung vor dem Formvorgang verdünnt wird. Das bedeutet, dass die hochviskose Spinnlösung, deren Viskosität über derjenigen liegt, die ein Verspinnen zulässt, zwischengelagert, ggf. gewärmt und anschliessend in einen eigenen speziellen Reaktor mit einem Verdünner auf die Viskosität der gewünschten Formlösung gebracht wird.

### AUFGABE

Der vorliegenden Erfindung liegt die Aufgabe zugrunde, das o.g. Verfahren zu vereinfachen und eine entsprechende Anlage zum Herstellen schlanker zu gestalten.

### LÖSUNG DER AUFGABE

Zur Lösung der Aufgabe führt, dass die Verdünnung in den Knetreaktor gegen Ende des Knetreaktors vor einer Austragseinrichtung und/oder in die Austragseinrichtung zugeführt wird.

Das bedeutet, dass aus dem Austrag die fertige Formlösung vorliegt, so dass diese dann in einem Pufferbehälter zwischengespeichert werden kann. Im Falle, dass auch gleich ein Verbrauch der Formlösung stattfinden soll, entfällt der Pufferbehälter und die fertige Formlösung wird weiterverarbeitet, z.B. einer Formeinrichtung direkt zugeführt.

Im Gegensatz zu der WO 2009/098073 liegt nun nicht mehr die Idee darin, die Herstellung der Formlösung -z.B. eine Spinnlösung und das Formen - Verspinnen voneinander zu trennen, sondern am Ausgang des ersten Knetreaktors liegt bereits die Formlösung mit der für die endgültige Formgebung notwendigen Viskosität vor. Es hat sich herausgestellt, dass in den bekannten Knetreaktoren vor der Austragseinrichtung mit einer relativ hohen Viskosität gearbeitet werden kann, so dass dieser Vorteil auch nach dem neuen erfindungsgemässen Verfahren vorliegt. Erst gegen Ende der Behandlung in dem Knetreaktor oder sogar erst in der Austragseinrichtung selbst erfolgt dann erfindungsgemäss die Verdünnung auf die für die Formlösung gewünschte Viskosität.

Auch beim vorliegenden Verfahren ist es von untergeordneter Bedeutung, welcher Formkörper hergestellt wird. Vorzugsweise werden Filamente, Vliese bzw. Filamentgarn hergestellt. Es können aber auch Filme, Hohlfasern, Membranen od. dgl. hergestellt werden. Die Formung der Lösung zu einem gewünschten zellulosischen Formkörper kann mit bekannten Spinndüsen zur Herstellung von Fasern, Schlitzdüsen oder Hohlfadenspinndüsen erfolgen. Im Anschluss an die Formung, d.h., vor dem Einbringen der geformten Lösung in das Koagulationsbad, kann diese auch verstreckt werden.

Als Lösungsmittel wird bevorzugt ein tertiäres Aminoxid, insbesondere ein Aminoxid-Monohydrat verwendet. Jedoch soll darauf die Erfindung nicht beschränkt sein. Auch ist die Erfindung nicht auf Zellulose beschränkt, sondern umfasst werden auch Stoffe, wie Proteine, Polylaktide oder Stärke oder ein Gemisch dieser Stoffe.

Als Verdünnungsmittel kann ebenfalls ein tertiäres Aminoxid verwendet werden, in Betracht kommen aber auch andere Verdünner.

Wie schon bei der WO 2009/098073 soll die Konzentration der Formlösung und/oder des Verdünners über den optischen Index (Brechungsindex) kontrolliert werden. Dies geschieht beim Verdünner vor dem Einbringen in die Formlösung und/oder bei der Formlösung nach der Verdünnung. Gewünscht wird ein optischer Index des Verdünners und/oder der Formlösung im Rahmen von 1.40 bis 1.50.

Um eine bessere und effektivere Einmischung des Verdünnungsmittels in die Formlösung zu gewähren, soll erfindungsgemäss die Formlösung nach der Austragseinrichtung gestaut werden. Dies kann beispielsweise durch eine Pumpe geschehen, die mit verminderter Drehzahl läuft. Das Stauen bewirkt, dass die Formlösung länger in der Austragseinrichtung verbleibt und dort besser mit dem Verdünner durchmischt wird.

Bei einem weiteren Ausführungsbeispiel der Erfindung kann der Formlösung vor der Austragseinrichtung und/oder in der Austragseinrichtung ein Additiv zugeführt werden. Bevorzugt soll das Additiv zusammen mit dem Verdünner zugeführt werden.

### FIGURENBESCHREIBUNG

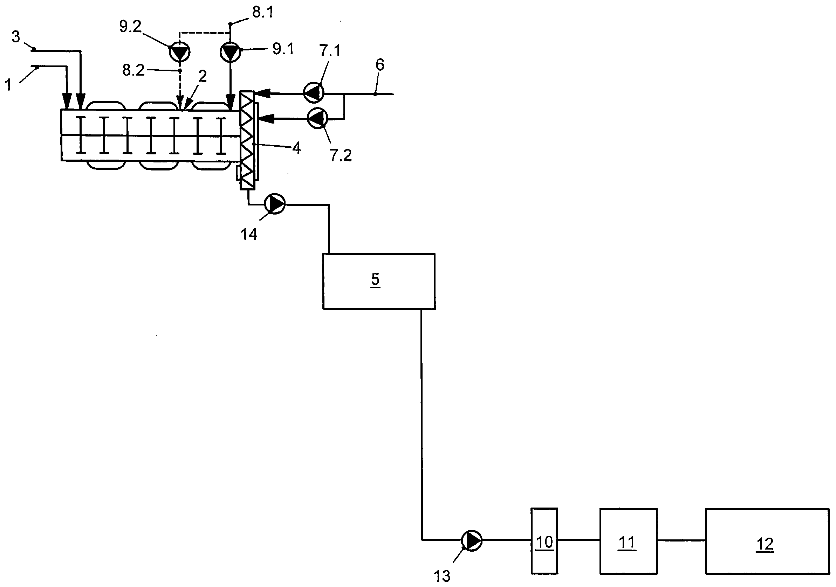

Weitere Vorteile, Merkmale und Einzelheiten der Erfindung ergeben sich aus der nachfolgenden Beschreibung bevorzugter Ausführungsbeispiele sowie anhand der Zeichnung; Diese zeigt in ihrer einzigen Figur ein blockschaltbildliches Schema für das erfindungsgemässe Verfahren zur Herstellung von Formkörpern aus einer Grundsubstanz, insbesondere aus nachwachsenden Rohstoffen.

Die hierfür notwendige Zellulose wird über die Zuleitung 1 einem Knetreaktor 2 zugeführt. Derartige horizontale Knetreaktoren sind beispielsweise aus der DE 199 40 521 A1 oder der DE 41 18 884 bekannt. Auf diese Knetreaktoren ist jedoch nicht die Erfindung beschränkt. Von der Erfindung werden alle Behandlungseinrichtungen umfasst, in denen nachwachsende Rohstoffe einer Behandlung zu einem späteren Verspinnen unterzogen werden können.

Im vorliegenden Ausführungsbeispiel erfolgt die Behandlung des nachwachsenden Rohstoffs mittels einem Lösungsmittel, bevorzugt Aminoxid-Monohydrat, welches über eine weitere Zuleitung 3 dem Knetreaktor zugeführt wird.

In dem Knetreaktor 2 erfolgt unter Wärmezugabe ein intensives Durchmischen des Rohstoffs mit dem Lösungsmittel und auch ein Verdampfen des Lösungsmittels, so dass eine relativ hochviskose Spinnlösung entsteht. Diese Spinnlösung wird dann über eine Austragseinrichtung 4 optional einem Pufferbehälter 5 zugeführt. Dort wird sie ggf. unter Wärmezugabe zwischengelagert.

Erfindungsgemäss soll jedoch diese relativ hochviskose Spinnlösung bevor sie optional dem Pufferbehälter 5 oder direkt einem endgültigen Verarbeiten zugeführt wird, verdünnt werden. Dies geschieht erfindungsgemäss in der Austragseinrichtung 4 oder sogar noch vor der Austragseinrichtung 4 in dem Knetreaktor 2 gegen Ende des Knetreaktors. Auch an eine Kombination beider Zugabeorte ist gedacht.

Zur Zugabe der Verdünnung in die Austragseinrichtung 4 ist eine weitere Zuleitung 6 vorgesehen, in die eine Pumpe 7 eingeschaltet ist. Eine weitere bzw. andere Zuleitung für die Verdünnung ist durch die Bezugszahl 8 angedeutet. In diese Zuleitung 8 ist gleichfalls eine Pumpe 9 eingeschaltet.

Zwischen dem Austrag 4 und dem optionalen Pufferbehälter 5 ist eine weitere Pumpe 14 eingeschaltet, mittels der die Formlösung nach dem Austrag gestaut wird.

Das erfindungsgemässe Verfahren wird wie folgt durchgeführt:
Über die Zuleitung 1 und die Zuleitung 3 erfolgt die Eingabe der Grundsubstanz, insbesondere des nachwachsenden Rohrstoffes und des Lösungsmittels in den Knetreaktor 2. Unter Wärmezugabe erfolgt ein intensives Durchmischen, wobei die Wärmezugabe von Aussen mittels eines Heizmantels, durch beheizte Knetwellen und/oder durch beheizte Knetelemente (Scheibenelemente) erfolgen kann. Ein weiterer mechanischer Wärmeeintrag erfolgt beim Durchmischen selbst durch die entsprechende Scherenergie. Durch das Verdampfen des Lösungsmittels wird die Formlösung (Spinnlösung) aufkonzentriert Diese Formlösung ist für ein späteres Verspinnen zu hochviskos. Sie wird nun mit einem Verdünner verdünnt, der über die Zuleitung 8 und/oder Zuleitung 6 zugeführt wird. Dabei wird die Konzentration der Formlösung und/oder des Verdünners über den optischen Index kontrolliert. Dieser optische Index wird auch als Brechungsindex bezeichnet. Er kennzeichnet die Brechung (Richtungsänderung) und das Reflektionsverhalten (Reflektion und Totalreflektion) von elektromagnetischen Wellen beim Treffen auf eine Grenzfläche zweier Medien.

Im vorliegenden Fall wird bevorzugt der optische Index des Verdünners vor dem Einbringen in die Formlösung und der optische Index in der Formlösung nach der Verdünnung kontrolliert. Der optische Index des Verdünners und/oder der Formlösung sollte bei 1.40 bis 1.50 liegen.

Des weiteren ist daran gedacht, vor dem Austrag oder in den Austrag, ggf. auch über die Zuleitung 6 bzw. 8, noch der Formlösung/Mischung ein Additiv zuzuführen. Das Additiv kann auch zusammen mit dem Verdünner zugeführt werden.

Sobald Spinnlösung gebraucht wird, erfolgt eine Entnahme der verdünnten Spinnlösung aus dem Pufferbehälter 5 und mittels einer Pumpe 13 ein Durchdrücken durch einen Spinnlösungsfilter 10. Hierdurch erfolgt nochmals eine Homogenisierung der Spinnlösung. Danach kann die Spinnlösung in einem weiteren Pufferbehälter 11 zwischengelagert werden, sofern dies notwendig ist. Das eigentliche Verspinnen erfolgt dann in einer Einrichtung 12.

**Bezugszeichenliste**

| | | | | | |
|---|---|---|---|---|---|
| 1 | Zuleitung | 34 | | 67 | |
| 2 | Knetreaktor | 35 | | 68 | |
| 3 | Zuleitung | 36 | | 69 | |
| 4 | Austragseinrichtung | 37 | | 70 | |
| 5 | Pufferbehälter | 38 | | 71 | |
| 6 | Zuleitung | 39 | | 72 | |
| 7 | Pumpe | 40 | | 73 | |
| 8 | Zuleitung | 41 | | 74 | |
| 9 | Pumpe | 42 | | 75 | |
| 10 | Spinnlösungsfilter | 43 | | 76 | |
| 11 | Pufferbehälter | 44 | | 77 | |
| 12 | Einrichtung | 45 | | 78 | |
| 13 | Pumpe | 46 | | 79 | |
| 14 | Pumpe | 47 | | | |
| 15 | | 48 | | | |
| 16 | | 49 | | | |
| 17 | | 50 | | | |
| 18 | | 51 | | E | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Herstellung von Formkörpern in einem Formwerkzeug, aus einer Grundsubstanz, insbesondere aus Zellulose, in einem Knetreaktor (2) zum Mischen der Grundsubstanz mit einem Lösungsmittel, wobei die Grundsubstanz zum Herstellen einer Formlösung mit dem Lösungsmittel vermischt und anschliessend dieses Lösungsmittel teilweise aus der Mischung entfernt und die Formlösung einer weiteren Einrichtung (12) zum Weiterverarbeiten des Produktes zugeführt wird, wobei die Formlösung vor dem Weiterverarbeiten verdünnt wird,
**dadurch gekennzeichnet,**
**dass** die Verdünnung in den Knetreaktor (2) gegen Ende des Knetreaktors (2) vor einer Austragseinrichtung (4) und/oder in die Austragseinrichtung (4) zugeführt wird.

2. Verfahren nach Anspruch 1, **dadurch gekennzeichnet, dass** die Formlösung nach der Austragseinrichtung (4) gestaut wird.

3. Verfahren nach Anspruch 1 oder 2, **dadurch gekennzeichnet, dass** die Konzentration der Formlösung und/oder des Verdünners über den optischen Index kontrolliert wird.

4. Verfahren nach Anspruch 3, **dadurch gekennzeichnet, dass** der optische Index des Verdünners vor dem Einbringen in die Formlösung und/oder der optische Index in der Formlösung nach der Verdünnung kontrolliert wird.

5. Verfahren nach wenigstens einem der Ansprüche 1 bis 4, **dadurch gekennzeichnet, dass** vor der Austragseinrichtung und/oder in der Austragseinrichtung der Formlösung/Mischung ein Aditiv zugeführt wird.

6. Verfahren nach Anspruch 5, **dadurch gekennzeichnet, dass** das Aditiv zusammen mit dem Verdünner zugeführt wird.

7. Verfahren nach einem der Ansprüche 5 oder 6, **dadurch gekennzeichnet, dass** das Additiv ein anorganisches Material ist, welches im Verdünner suspendiert ist.

8. Verfahren nach einem der Ansprüche 5 oder 6, **dadurch gekennzeichnet, dass** das Additiv ein organisches Material ist, welches im Verdünner suspendiert oder gelöst ist.

9. Verfahren nach einem der Ansprüche 5 bis 8, **dadurch gekennzeichnet, dass** das Additiv ein Gemisch aus verschiedenen organischen und anorganischen Materialien ist.

10. Verfahren nach einem der Ansprüche 5 bis 9, **dadurch gekennzeichnet, dass** das Additivgemisch im Verdünner suspendiert und oder gelöst ist.

11. Verfahren nach einem der Ansprüche 5 bis 10, **dadurch gekennzeichnet, dass** das Additiv bzw. Additivgemisch vor der Zugabe mit oder ohne Verdünner feinst gemahlen wird.

12. Verfahren nach einem der Ansprüche 1 bis 11, **dadurch gekennzeichnet, dass** der Verdünner ein tertiäres Aminoxid ein wässriges tertiäres Aminoxid, z.B. ein Aminoxid-Monohydrat ist.

## Claims

1. A method for producing moulded bodies in a mould, from a base substance, in particular from cellulose, in a kneading reactor (2) for mixing the base substance with a solvent, wherein the base substance is mixed with the solvent to produce a moulding solution and then this solvent is partly removed from the mixture and the moulding solution is supplied to a further means (12) for further processing of the product, wherein the moulding solution is diluted before the further processing,
**characterised in that**
the dilution is supplied into the kneading reactor (2) towards the end of the kneading reactor (2) before a discharge means (4) and/or into the discharge means (4).

2. A method according to Claim 1, **characterised in that** the moulding solution is held up after the discharge means (4).

3. A method according to Claim 1 or 2, **characterised in that** the concentration of the moulding solution and/or of the diluent is monitored via the optical index.

4. A method according to Claim 3, **characterised in that** the optical index of the diluent is monitored before the introduction into the moulding solution and/or the optical index is monitored in the moulding solution after the dilution.

5. A method according to at least one of Claims 1 to 4, **characterised in that** an additive is supplied before the discharge means and/or in the discharge means for the moulding solution/mixture.

6. A method according to Claim 5, **characterised in that** the additive is supplied together with the diluent.

7. A method according to one of Claims 5 or 6, **characterised in that** the additive is an inorganic material which is suspended in the diluent.

8. A method according to one of Claims 5 or 6, **characterised in that** the additive is an organic material which is suspended or dissolved in the diluent.

9. A method according to one of Claims 5 to 8, **characterised in that** the additive is a mixture of different organic and inorganic materials.

10. A method according to one of Claims 5 to 9, **characterised in that** the additive mixture is suspended and/or dissolved in the diluent.

11. A method according to one of Claims 5 to 10, **characterised in that** the additive or additive mixture is very finely ground before the addition with or without diluent.

12. A method according to one of Claims 1 to 11, **characterised in that** the diluent is a tertiary amine oxide or an aqueous tertiary amine oxide, e.g. an amine oxide monohydrate.

## Revendications

1. Procédé pour la fabrication de corps moulés dans un moule à partir d'une substance de base, en particulier à partir de cellulose, dans un réacteur de pétrissage (2) pour mélanger la substance de base avec un solvant, dans lequel la substance de base est mélangée, pour la production d'une solution de moulage, avec le solvant, et ensuite ce solvant est partiellement éliminé du mélange et la solution de moulage est amenée à un autre dispositif (12) pour le traitement ultérieur du produit, la solution de moulage étant diluée avant le traitement ultérieur,
**caractérisé par le fait**
**que** la dilution est alimentée dans le réacteur de pétrissage (2) vers l'extrémité du réacteur de pétrissage (2) avant un dispositif d'évacuation (4) et/ou dans le dispositif d'évacuation (4).

2. Procédé selon la revendication 1, **caractérisé par le fait que** la solution de moulage est accumulée après le dispositif d'évacuation (4).

3. Procédé selon la revendication 1 ou 2, **caractérisé par le fait que** la concentration de la solution de moulage et/ou du diluant est contrôlée par l'indice optique.

4. Procédé selon la revendication 3, **caractérisé par le fait que** l'indice optique du diluant est contrôlé avant l'introduction dans la solution de moulage et/ou l'indice optique dans la solution de moulage après dilution.

5. Procédé selon au moins l'une des revendications 1 à 4, **caractérisé par le fait qu'**avant le dispositif d'évacuation et/ou dans le dispositif d'évacuation de la solution de moulage/mélange est alimenté un additif.

6. Procédé selon la revendication 5, **caractérisé par le fait que** l'additif est alimenté ensemble avec le diluant.

7. Procédé selon l'une des revendications 5 ou 6, **caractérisé par le fait que** l'additif est une matière inorganique qui est mise en suspension dans le diluant.

8. Procédé selon l'une des revendications 5 ou 6, **caractérisé par le fait que** l'additif est une matière organique qui est mise en suspension ou dissoute dans le diluant.

9. Procédé selon l'une des revendications 5 à 8, **caractérisé par le fait que** l'additif est un mélange de différentes matières organiques et inorganiques.

10. Procédé selon l'une des revendications 5 à 9, **caractérisé par le fait que** le mélange d'additifs est mis en suspension dans le diluant et/ou est dissous.

11. Procédé selon l'une des revendications 5 à 10, **caractérisé par le fait que** l'additif ou le mélange d'additifs est très finement broyé avec ou sans solvant, avant l'addition.

12. Procédé selon l'une des revendications 1 à 11, **caractérisé par le fait que** le diluant est un oxyde d'amine tertiaire, un oxyde d'amine tertiaire aqueux, par exemple un monohydrate d'oxyde d'amine.
